**Europäisches Patentamt**

**European Patent Office**

**Office européen des brevets**

(19)

(11) **EP 1 264 849 A1**

(12) **EUROPÄISCHE PATENTANMELDUNG**

(43) Veröffentlichungstag:
**11.12.2002  Patentblatt 2002/50**

(51) Int Cl.⁷: **C08G 8/10**, C09D 161/06

(21) Anmeldenummer: **02011683.6**

(22) Anmeldetag: **03.06.2002**

| | |
|---|---|
| (84) Benannte Vertragsstaaten:<br>**AT BE CH CY DE DK ES FI FR GB GR IE IT LI LU MC NL PT SE TR**<br>Benannte Erstreckungsstaaten:<br>**AL LT LV MK RO SI**<br><br>(30) Priorität: **08.06.2001  DE 10128040**<br><br>(71) Anmelder: **Solutia Germany GmbH & Co. KG**<br>**55252 Mainz-Kastel (DE)** | (72) Erfinder:<br>• **Ziegler, Peter, Dr.**<br> **55130 Mainz (DE)**<br>• **Schäfer, Ralph**<br> **65205 Wiesbaden (DE)**<br>• **Has, Adam**<br> **55252 Mainz-Kastel (DE)**<br>• **Scholl, Frank**<br> **61352 Bad Homburg (DE)**<br>• **Wonner, Johann, Dr.**<br> **63110 Rodgau (DE)** |

(54) **Wässrige fremdemulgierte Resoldispersionen**

(57)   Wäßrige fremdemulgierte Resoldispersionen, erhältlich durch Umsetzung von Phenolen mit Oxoverbindungen in Gegenwart eines alkalischen Katalysators, Zugabe eines Emulgators und anschließende Dispergierung in Wasser, wobei als Katalysator bei der Resolbildung aliphatische lineare, verzweigte oder cyclische tertiäre Monohydroxyamine mit 4 bis 40 Kohlenstoffatomen eingesetzt werden, und deren Verwendung als Bindemittel für Schleifmittel, insbesondere Schleifmittel auf Unterlage.

**EP 1 264 849 A1**

**Beschreibung**

Die Erfindung betrifft wäßrige fremdemulgierte Resoldispersionen.

Resole sind Harze aus Phenolen und Oxoverbindungen, insbesondere Aldehyden, die in der Wärme zu einem unlöslichen und nicht mehr schmelzbaren Körper vernetzen. Üblicherweise wird Formaldehyd oder eine Formaldehyd abspaltende Verbindung in Kombination mit gegebenenfalls alkylierten Phenolen als Rohstoff eingesetzt. Die Stoffmenge des eingesetzten Formaldehyds ist stets größer als die des Phenols; die Addition zu den entsprechenden Hydroxyalkylphenolen erfolgt unter alkalischen Bedingungen.

Resole werden lösungsmittelfrei (insbesondere für Kitte), in Kombination mit anderen Harzen, Weichharzen oder Ölen als "plastifizierte Resole", als Lösung in organischen Lösungsmitteln (als Bestandteil von Lakken) und als wäßrige Lösung oder Dispersion eingesetzt. Im letzten Fall wird hauptsächlich durch Einbau von hydrophilen Gruppen wie - zum Teil neutralisierten - Carboxylgruppen oder durch Zusatz von Emulgatoren die Wasserverdünnbarkeit erreicht.

Fremdemulgierte wäßrige Dispersionen von Resolen sind beispielsweise aus der US-A 3,826,060 bekannt. Gemäß dieser Lehre wird die Resolbildung durch Zusatz von stickstoffhaltigen Katalysatoren ausgewählt aus Ammoniak, Hexamethylentetramin und aliphatischen sowie aromatischen Aminen mit einer molaren Masse von weniger als 300 g/mol durchgeführt, wobei das Verhältnis der Masse des basischen Katalysators zur Masse des Phenols zwischen 0,1 und 20 % liegt (= 0,1 bis 20 cg/g).

In den Untersuchungen, die zu der vorliegenden Erfindung führten, wurde gefunden, daß die auf diese Weise hergestellten Harze durch Wärmeeinwirkung (beim Härtungsprozeß) eine violette bis braune Farbe entwickeln. Diese Verfärbung verbietet die Anwendung solcher wäßriger Resole als Bindemittel oder Bindemittelkomponente in Beschichtungsmitteln, die hellfarbige Beschichtungen ergeben sollen. Es besteht daher die Aufgabe, solche wäßrigen Resoldispersionen zu entwickeln, die sich beim Härtungsprozeß nicht störend verfärben.

Es wurde nun gefunden, daß sich die Verfärbung der mit wäßrigen Resoldispersionen hergestellten Beschichtungen vermindern oder ganz unterdrücken läßt, wenn tertiäre Monohydroxyamine als Katalysatoren bei der Resolbildung eingesetzt werden.

Gegenstand der vorliegenden Erfindung ist daher eine wäßrige fremdemulgierte Resoldispersion, erhältlich durch Umsetzung von Phenolen **A** mit Oxoverbindungen **B** in Gegenwart eines alkalischen Katalysators **C**, Zugabe eines Emulgators **D** und anschließende Dispergierung durch Einrühren von Wasser, dadurch gekennzeichnet, daß als Katalysator **C** bei der Resolbildung aliphatische lineare, verzweigte oder cyclische tertiäre Monohydroxyamine mit 4 bis 40 Kohlenstoffatomen eingesetzt werden.

Weiterer Gegenstand der vorliegenden Erfindung ist ein Verfahren zur Herstellung von wäßrigen fremdemulgierten Resoldispersionen durch Umsetzung von Phenolen A mit Oxoverbindungen **B** in Gegenwart eines alkalischen Katalysators **C**, Zugabe eines Emulgators **D** und anschließende Dispergierung durch Einrühren von Wasser, dadurch gekennzeichnet, daß als Katalysator **C** bei der Resolbildung aliphatische lineare, verzweigte oder cyclische tertiäre Monohydroxyamine mit 4 bis 40 Kohlenstoffatomen eingesetzt werden.

Die Phenole **A** sind gegenüber Oxoverbindungen **B** mindestens difunktionell, d. h. sie besitzen im Mittel mindestens zwei Wasserstoffatome in ortho- oder para-Stellung zu der phenolischen Hydroxylgruppe. Difunktionelle Phenole sind o- und p-Kresol, p-tert.-Butylphenol, p-tert.-Butyl-m-kresol, p-Nonylphenol, 3,4-, 2,5-, und 2,3-Xylenol, p-Phenylphenol; trifunktionelle Phenole sind Phenol selbst, m-Kresol, 3,5-Xylenol, Resorcin, Cardanol und Cardol; tetrafunktionelle Phenole sind zum Beispiel Bisphenol A und Bisphenol F. Werden drei- und höherfunktionelle Phenole eingesetzt, so können auch monofunktionelle Phenole in untergeordnetem Maß (bis zu 20 % der Masse der Phenole, bevorzugt bis zu 10 %) eingesetzt werden, solche monofunktionellen Phenole sind beispielsweise 2,4- und 2,6-Xylenol. Bevorzugt ist hier der Einsatz von (unsubstituiertem) Phenol sowie p-tert.-Butylphenol und p-Nonylphenol.

Es ist im Rahmen der Erfindung auch möglich, die Phenole oder einen Teil der Phenole durch Novolake zu ersetzen. Dabei ist es bevorzugt, bis zu 70 % der Masse der Phenole durch Novolake zu ersetzen, die von Phenol selbst oder Mischungen von Phenol mit einem oder mehreren der oben genannten Phenole abgeleitet sind.

Unter den eingesetzten Oxoverbindungen **B** wird Formaldehyd bevorzugt, wobei dieser in Form einer wäßrigen Lösung (Formalin), als Feststoff (Paraformaldehyd, mit geringen Wasseranteilen), als cyclische Oligomere (Trioxan, Tetroxan) oder in Form von Formaldehyd-abgebenden Verbindungen eingesetzt werden kann. Die Verwendung von Urotropin (Hexamethylentetramin) ist jedoch für die vorliegende Erfindung nicht bevorzugt. Andere Aldehyde, wie Acetaldehyd, Benzaldehyd, Salicylaldehyd, Crotonaldehyd, Glyoxal und Furfurol sind ebenfalls einsetzbar, jedoch ist ihre Verwendung nicht bevorzugt; ihr Massenanteil sollte nicht mehr als 5 % der Masse des eingesetzten Formaldehyds betragen. Die Verwendung von Ketonen wie Aceton als Oxoverbindungen ist im Rahmen der vorliegenden Erfindung weniger bevorzugt.

Das Verhältnis der Stoffmengen der Phenole $n$ (P) und der Oxoverbindungen $n$ (O) beträgt dabei bevorzugt

$$\nu \cdot n(\text{P}){:}n(\text{O})=1{:}0{,}3 \text{ bis } 1{:}1{,}2,$$

bevorzugt 1: 0,4 bis 1: 1,1, und besonders bevorzugt 1: 0,5 bis 1 : 1,05,
wobei ν die (mittlere) Anzahl der reaktiven Stellen in dem Phenol bzw. der Mischung der Phenole ist (3 bei Phenol selbst).

Die aliphatischen tertiären Monohydroxyamine **C** genügen der Formel $R^1R^2N-R^3-OH$,
wobei $R^1$ und $R^2$ gleich oder verschieden sein können und ausgewählt sind aus linearen, verzweigten und cyclischen aliphatischen Resten mit 1 bis 18 Kohlenstoffatomen, bevorzugt Methyl-, Äthyl-, n-Propyl-, iso-Propyl-, n-Butyl-, iso-Butyl-, tert.-Butyl-, n-Hexyl-, 2-Äthylhexyl-, Decyl-, Palmityl- und Stearyl-Resten, und $R^3$ ein Alkylenrest mit bevorzugt 2 bis 6 Kohlenstoffatomen ist, bevorzugt sind 1,2-Äthylen-, 1,2-und 1,3-Propylen-, 1,4-Butylenund 1,6-Hexylen-Reste. Bevorzugt sind N, N-Dimethyläthanolamin, N,N-Diäthyläthanolamin, N, N-Dimethylisopropanolamin, N,N-Diäthylisopropanolamin, 1-(N,N-Dimethylamino)-butanol-4 und 1-(N,N-Dimethylamino)-hexanol-6.

Bevorzugt wird der Katalysator in einer solchen Menge eingesetzt, daß das Verhältnis der Masse des Katalysators **C** zur Masse des Phenols 2 bis 20 %, bevorzugt 3 bis 18 %, und insbesondere 5 bis 15 % beträgt.

Die Emulgatoren **D** sind bevorzugt Eiweiß-Verbindungen, wie Casein, vegetabile Proteine wie beispielsweise Soja-Protein, die in wäßrigen Alkalien löslich und für Resole ausgezeichnete Emulgatoren sind. Bevorzugt wird dem Emulgator ein basisches Carbonsäureamid, wie Harnstoff, Thioharnstoff, Äthylenharnstoff, Acetylenharnstoff, Guanidin, Dicyandiamid, Melamin oder Acetoguanamin zugemischt, wobei die Masse des Amids 5 bis 120 % der Masse der Eiweiß-Verbindung beträgt. Die Masse des Protein-Emulgators beträgt bevorzugt 1 bis 10 % der Masse des Resols, besonders bevorzugt 2 bis 8%.

Weiterhin kommen als Emulgatoren Gummi Arabicum, davon abgeleitete oder andere Gummen oder - weniger bevorzugt - Ligninsulfat in Betracht.

Der Einsatz von Bindemitteln in der Schleifmittelindustrie bedingt u.a. eine schnelle und blasenfreie Trocknung und Härtung. Das erfindungsgemäß hergestellte Harzsystem kann als Bindemittel anstelle herkömmlich hergestellter Phenolresole oder in Kombination mit diesen eingesetzt werden. Aufgrund seiner schnellen Trocknung kann es im Grundbinderbereich der Schleifmittelfertigung auch als Alternative zu 2K-Systemen eingesetzt werden. Zusätzlich besteht die Möglichkeit der Plastifizierung in einem weiteren Bereich als dies bei wäßrigen Phenolresolen aufgrund der beschränkten Wasserverdünnbarkeit möglich ist. So ist eine Kombination des erfindungsgemäß hergestellten Harzsystems mit Acrylat- oder Kautschukdispersionen, wie z.B. SBR- oder NBR-Latices zur Verbesserung der Plastizität möglich.

Die wäßrigen Resol-Dispersionen gemäß der Erfindung lassen sich zur Herstellung von Beschichtungsmitteln allein oder in Kombination mit anderen wäßrig dispergierten Harzen verwenden; insbesondere sind sie geeignet als Bindemittel für Schleifmittel.

Für die Herstellung von Schleifmitteln auf Unterlagen dienen Papiere (flächenbezogene Masse 70 bis 320 $g/m^2$), Kombinationen von Gewebe und Papieren (600 bis 1000 $g/m^2$) oder Folien und Papieren (100 bis 300 $g/m^2$)sowie Vulkanfiber mit Dicken von 0,4 bis 0,8 mm und flächenbezogener Masse von 500 bis 1200 $g/m^2$. Die Bahnen des Trägermaterials werden mit Auftragswalzen mit einer dünnen Schicht eines Bindemittels beschichtet ("Grundleimauftrag"), anschließend wird das Schleifkorn (üblicherweise elektrostatisch) eingestreut. Die Grundschicht wird dann in einem Vortrokkengang getrocknet und ausgehärtet. Zur endgültigen Fixierung und Einbettung des Schleifkorns wird eine zweite Bindemittelschicht, der "Nachleim" oder "Decklack" aufgetragen. Im Haupttrockenkanal erfolgt bei Phenolharzen als Bindemittel die Verfestigung des Nachleims in unterschiedlichen Temperaturzonen von 80 bis 120 °C. Die Trocknung und Aushärtung erfolgt soweit, bis das Material ohne Probleme (Blockneigung) aufgewickelt werden kann. Die Rollen werden in einem separaten Ofen auf den erforderlichen Endaushärtungsgrad gebracht. Die abgestuften Trocknungstemperaturen sind bedingt durch die Forderung nach Blasenfreiheit. Eine Verkürzung der Trocknungszeiten bei 90 °C läßt sich bisher nur mit Zweikomponentensystemen erreichen.

Mit den erfindungsgemäßen wäßrigen Resoldispersionen lassen sich sehr kurze Vortrocknungszeiten bei 90 °C realisieren; dies ist für den Durchsatz der Trocknungsanlagen ein erheblicher Fortschritt.

**Beispiele**

**Beispiel 1**

32,25 kg Phenol und 5,01 kg einer 37 %igen wäßrigen Formaldehydlösung wurden in einem Kessel vorgelegt und auf 65 bis 70 °C Innentemperatur geheizt. Zu dieser Lösung wurden unter gutem Rühren 3,89 kg Dimethyläthanolamin rasch zugegeben, die Masse wurde unter Rühren bei 65 bis 70 °C während ca. 0,5 Stunden gehalten. Danach wurden bei derselben Temperatur weitere 4,93 kg der 37 %igen wäßrigen Formaldehydlösung sowie 8,6 kg Paraformaldehyd (Formaldehyd-Massenanteil ca. 91 %) zugesetzt, nach Zugabeende wurde noch 30 Minuten nachgerührt. In mehreren Portionen wurden dann weitere 17,56 kg der Formaldehydlösung zugesetzt; nach beendeter Zugabe wurde auf 85 bis 90 °C geheizt und bei dieser Temperatur unter Rühren gehalten, bis eine Probe des Harzes, gelöst in der doppelten Masse Methoxypropanol, einen Viskosität von ca. 350 mPa·s aufwies. Sodann wurde abgekühlt auf ca. 55 °C Innentemperatur. Eine separat bereitete Lösung eines Emulgators (2,13 kg Casein, 2,13 kg Harnstoff, 150 g Dimethyläthanolamin und 4,85 kg Wasser, bei 30 °C während einer Stunde homogenisiert) wurde innerhalb von 30 Minuten eingerührt. Anschließend wurde der Druck der Atmosphäre über der Flüssigkeit im Kessel auf ca. 180 hPa (180 mbar) vermindert, und 18,5 kg entionisiertes Wasser wurden während ca. 1,5 Stunden eingerührt, nach beendeter Zugabe wurde der Kessel auf Normaldruck belüftet. Der Kesselinhalt wurde weitere 5 bis 6 Stunden bei 50 bis 60 °C gehalten, bis die wäßrige Dispersion eine Viskosität von ca. 150 mPa·s (bei 23 °C) aufwies. Anschließend wurde auf unter 35 °C abgekühlt und der Kesselinhalt durch einen Siebsack (Porendurchmesser 150 μm) in ein Faß entleert.

**Beispiel 2**

Zur Ermittlung der blasenfreien Härtung (Reaktionsblasen) wurde auf ein Trägermaterial (Vulkanfiber, Maße 10 x 12 cm$^2$) mit einer Rakel ein 200 μm dikker Film eines handelsüblichen wäßrigen Phenolresols (Viskosität ca. 400 mPa·s, Festkörper-Massenanteil (nichtflüchtige Anteile) ca. 74 %, Wasserverdünnbarkeit 1: >1) aufgebracht, mit Korund-Schleifkörnung (F 16, DIN 69101) im Überschuß bestreut (der Überschuß wurde anschließend abgeworfen) und 1 h bei 90 °C und danach 30 Minuten bei 120 °C vorverfestigt. Das zu untersuchende Harz wurde mittels einer Gummiwalze (Härte: 30° Shore A) auf die Probekörper aufgebracht (Auflage ca. 650 g/m$^2$). Die Probekörper wurden während unterschiedlicher Zeiten (120, 90, 75 und 60 min) bei 90 °C getrocknet und anschließend auf 130 °C aufgeheizt. Es wurde die Zeit zum Vortrocknen bei 90 °C bestimmt, die erforderlich war, um die Probe bei 130 °C anschließend blasenfrei auszuhärten. Mit einem Standardharz (wie oben) wurden hierfür 120 bis 90 min benötigt. Das erfindungsgemäß nach Beispiel 1 hergestellte Harzsystem benötigte eine Vortrocknungszeit bei 90 °C von weniger als 60 Minuten für die blasenfreie Aushärtung.

Die Wasserverdünnbarkeit wurde bestimmt, indem 5 g der Harzlösung vorgelegt wurden und allmählich Wasser unter Rühren zugefügt wurde, bis die Mischung trüb wurde. Die Wasserverdünnbarkeit wurde dann als Verhältnis der Masse der Harzlösung (in Lieferform) und der Masse des bis zur Trübung zugesetzten Wassers angegeben.

**Beispiel 3**

Zur Ermittlung der Trocknungsgeschwindigkeit wurde eine definierte Menge (1,5 ml) der zu untersuchenden Harzlösung auf eine temperierte Heizplatte (plan geschliffen) aufgegeben. Zur Beurteilung der Trocknung wurde in Anlehnung an die Endpunkterkennung der B-Zeit-Messung (DIN EN ISO 8987) der Fadenzug der Probe beurteilt, dabei wurde Zeit bis zum Abreißen des Fadens ermittelt. Für das genannte Standardharz ergab sich eine Trocknungszeit bei 90 °C von ca. 80 min. Das erfindungsgemäß nach Beispiel 1 hergestellte Harzsystem war bei 90 °C bereits nach 20 Minuten getrocknet.

**Patentansprüche**

1. Wäßrige fremdemulgierte Resoldispersionen, erhältlich durch Umsetzung von Phenolen **A** mit Oxoverbindungen **B** in Gegenwart eines alkalischen Katalysators **C**, Zugabe eines Emulgators **D** und anschließende Dispergierung in Wasser, **dadurch gekennzeichnet, daß** als Katalysator **C** bei der Resolbildung aliphatische lineare, verzweigte oder cyclische tertiäre Monohydroxyamine mit 4 bis 40 Kohlenstoffatomen eingesetzt werden.

2. Wäßrige fremdemulgierte Resoldispersionen nach Anspruch 1, **dadurch gekennzeichnet, daß** als Katalysator **C** bei der Resolbildung Monohydroxyamine eingesetzt werden, ausgewählt aus N,N-Dimethyläthanolamin, N,N-Diäthyläthanolamin, N,N-Dimethylisopropanolamin,N,N-Diäthylisopropanolamin, 1-(N,N-Dimethylamino)-butanol-4 und 1-(N, N-Dimethylamino)-hexanol-6.

3. Wäßrige fremdemulgierte Resoldispersionen nach Anspruch 1, **dadurch gekennzeichnet, daß** die Phenole **A** ausgewählt sind aus Phenol, p-tert.-Butylphenol und p-Nonylphenol.

4. Wäßrige fremdemulgierte Resoldispersionen nach Anspruch 1, **dadurch gekennzeichnet, daß** die Oxoverbindung **B** Formaldehyd ist.

5. Wäßrige fremdemulgierte Resoldispersionen nach Anspruch 1, **dadurch gekennzeichnet, daß** der Emulgator **D** Casein oder Soja-Protein enthält.

6. Verfahren zur Herstellung von wäßrigen fremdemulgierte Resoldispersionen nach Anspruch 1, **dadurch gekennzeichnet, daß** Phenole **A** mit Oxoverbindungen **B** in Gegenwart eines alkalischen Katalysators **C** umgesetzt werden, und nach Zugabe einer wäßrigen Lösung eines Emulgators **D** die Reaktionsmasse in Wasser dispergiert wird, **dadurch gekennzeichnet, daß** als Katalysator C bei der Resolbildung aliphatische lineare, verzweigte oder cyclische tertiäre Monohydroxyamine mit 4 bis 40 Kohlenstoffatomen eingesetzt werden.

7. Verfahren nach Anspruch 6, **dadurch gekennzeichnet, daß** als Katalysatoren Monohydroxyamine eingesetzt werden, ausgewählt aus N,N-Dimethyläthanolamin, N,N-Diäthyläthanolamin, N,N-Dimethylisopropanolamin, N,N-Diäthylisopropanolamin, 1-(N,N-Dimethylamino)-butanol-4 und 1-(N, N-Dimethylamino)-hexanol-6.

8. Verfahren nach Anspruch 6, **dadurch gekennzeichnet, daß** als Emulgator eine Mischung eingesetzt wird aus einem Protein-Emulgator und einem Carbonsäureamid, ausgewählt aus Harnstoff, Äthy- lenharnstoff, Acetylenharnstoff, Guanidin, Dicyan- diamid, Melamin und Acetoguanamin.

9. Verfahren nach Anspruch 6, **dadurch gekennzeichnet, daß** der Emulgator D Casein oder Soja- Protein enthält.

10. Verwendung einer wäßrigen fremdemulgierten Resoldispersion nach Anspruch 1 zur Herstellung von Bindemitteln für Schleifmittel auf flächigen Unterla- gen, insbesondere auf Vliesen.

**Europäisches Patentamt**

# EUROPÄISCHER RECHERCHENBERICHT

Nummer der Anmeldung

EP 02 01 1683

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 00 78834 A (MALHIEUXE BRUNO ;TETART SERGE (FR); ESPIARD PHILLIPE (FR); CERTAIN) 28. Dezember 2000 (2000-12-28) * Seite 8, Zeile 26-30 * * Seite 14, Zeile 22-24 * | 1-4,6,7, 10 | C08G8/10 C09D161/06 |
| X | US 3 251 791 A (LAURENCE GOODCHILD SYDNEY) 17. Mai 1966 (1966-05-17) * Beispiel 1 * | 1-4,6,7, 10 | |
| X | US 5 623 032 A (WU GAOMING) 22. April 1997 (1997-04-22) * Spalte 4, Zeile 16-18 * * Spalte 5, Zeile 5-20 * * Ansprüche 1-3 * | 1-4,10 | |
| Y | US 4 060 504 A (HIGGINBOTTOM HAROLD P) 29. November 1977 (1977-11-29) * Ansprüche 1,6,7 * * Spalte 3, Zeile 20-27 * | 1-10 | |
| Y | US 4 110 540 A (FREITAG DIETER ET AL) 29. August 1978 (1978-08-29) * Spalte 5, Zeile 46-53 * | 1-10 | RECHERCHIERTE SACHGEBIETE (Int.Cl.7) C08G C09D C08L |
| Y | US 3 862 060 A (ANDERSON GEORGE J ET AL) 21. Januar 1975 (1975-01-21) * Spalte 3, Zeile 56 - Spalte 4, Zeile 36 * * Anspruch 1 * | 1-10 | |
| Y | US 4 808 655 A (GULBINS ERICH ET AL) 28. Februar 1989 (1989-02-28) * Beispiele IV,V * | 1-10 | |

Der vorliegende Recherchenbericht wurde für alle Patentansprüche erstellt

| Recherchenort | Abschlußdatum der Recherche | Prüfer |
|---|---|---|
| DEN HAAG | 11. September 2002 | Paalman, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 02 01 1683

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-09-2002

| Im Recherchenbericht angeführtes Patentdokument | | Datum der Veröffentlichung | Mitglied(er) der Patentfamilie | | Datum der Veröffentlichung |
|---|---|---|---|---|---|
| WO 0078834 | A | 28-12-2000 | AU | 5622200 A | 09-01-2001 |
| | | | EP | 1194464 A1 | 10-04-2002 |
| | | | WO | 0078834 A1 | 28-12-2000 |
| US 3251791 | A | 17-05-1966 | GB | 943155 A | 27-11-1963 |
| | | | DE | 1495872 A1 | 09-10-1969 |
| | | | SE | 301357 B | 04-06-1968 |
| US 5623032 | A | 22-04-1997 | AU | 697609 B2 | 15-10-1998 |
| | | | AU | 6393796 A | 22-01-1997 |
| | | | EP | 0833852 A1 | 08-04-1998 |
| | | | JP | 11508307 T | 21-07-1999 |
| | | | NZ | 312409 A | 28-07-1998 |
| | | | WO | 9700900 A1 | 09-01-1997 |
| US 4060504 | A | 29-11-1977 | AU | 503294 B2 | 30-08-1979 |
| | | | AU | 1772076 A | 23-03-1978 |
| | | | CA | 1056973 A1 | 19-06-1979 |
| US 4110540 | A | 29-08-1978 | DE | 2534559 A1 | 10-02-1977 |
| | | | AT | 346319 B | 10-11-1978 |
| | | | AT | 566376 A | 15-03-1978 |
| | | | AT | 623177 A | 15-07-1979 |
| | | | CA | 1080256 A1 | 24-06-1980 |
| | | | CH | 621322 A5 | 30-01-1981 |
| | | | ES | 450349 A1 | 01-09-1977 |
| | | | FR | 2320282 A1 | 04-03-1977 |
| | | | GB | 1525348 A | 20-09-1978 |
| | | | JP | 52019643 A | 15-02-1977 |
| | | | NL | 7608519 A | 04-02-1977 |
| | | | SE | 7608562 A | 03-02-1977 |
| US 3862060 | A | 21-01-1975 | CA | 1033087 A1 | 13-06-1978 |
| US 4808655 | A | 28-02-1989 | DE | 3629581 A1 | 03-03-1988 |
| | | | AT | 74372 T | 15-04-1992 |
| | | | DE | 3777939 D1 | 07-05-1992 |
| | | | EP | 0262376 A2 | 06-04-1988 |
| | | | ES | 2031859 T3 | 01-01-1993 |
| | | | JP | 63063759 A | 22-03-1988 |
| | | | US | 4840990 A | 20-06-1989 |

EPO FORM P0461

Für nähere Einzelheiten zu diesem Anhang : siehe Amtsblatt des Europäischen Patentamts, Nr.12/82